# EUROPÄISCHE PATENTSCHRIFT

(11) **EP 2 203 325 B1**
(45) Veröffentlichungstag und Bekanntmachung des Hinweises auf die Patenterteilung: **16.11.2011**
(21) Anmeldenummer: 08802373.4
(22) Anmeldetag: 19.09.2008
(51) Int. Cl.: B60J 7/22

(54) **WINDSCHOTTANORDNUNG**
WIND BLOCKER ARRANGEMENT
SYSTÈME DÉFLECTEUR D'AIR

(30) Priorität: 31.10.2007 DE 102007051987
(43) Veröffentlichungstag der Anmeldung: 07.07.2010
(73) Patentinhaber: Daimler AG, 70327 Stuttgart (DE)
(72) Erfinder: LEHMANN, Peter, 75378 Bad Liebenzell (DE); SKRZYPEK, Uwe, 71297 Moensheim (DE); WOLPERT, Engelbert, 70176 Stuttgart (DE)
(74) Vertreter: JENSEN & SON
(86) Internationale Anmeldenummer: PCT/EP2008/007858
(87) Internationale Veröffentlichungsnummer: WO 2009/056195

(56) Entgegenhaltungen:
- DE-A1- 3 612 165
- DE-A1- 4 119 529
- DE-A1-102005 029 696
- DE-C1- 19 725 217
- DE-C2- 4 315 139
- DE-C2- 4 405 707
- DE-C2- 19 708 156

## Beschreibung

Die vorliegende Erfindung betrifft eine Windschottanordnung für einen als Cabriolet ausgestalteten Personenkraftwagen, mit den Merkmalen des Oberbegriffs des Anspruchs 1.

Beim Fahren eines Cabriolets entsteht bei geöffnetem Dach durch die über die Windschutzscheibe nach oben verdrängte und den Fahrgastraum überströmende Luft im Fahrgastraum ein Unterdruck. Dies führt vor allem bei hochgefahrenen Seitenscheiben dazu, dass Luft heckseitig nachströmt, was bei den Insassen zu unangenehmen Zugerscheinungen im Hals-, Nacken- und Kopfbereich sowie zu starken Haarverwirbelungen führt. Durch ein Windschott können diese Rückströmungen erheblich reduziert werden. Das Windschott erstreckt sich dabei im Fahrgastraum hinter den Insassen in einer Fahrzeugquerebene.

Aus der DE 43 15 139 C2 ist eine Windschottanordnung bekannt, die zwei Rollo-Einrichtungen aufweist, die jeweils eine Welle und eine auf die Welle aufrollbare Materialbahn umfassen. Für jede Rollo-Einrichtung ist außerdem ein Bügel vorgesehen, an dem die Materialbahn befestigt ist und mit dem die Materialbahn von der Welle abwickelbar ist. Ferner sind für jede Rollo-Einrichtung zwei seitliche Arme vorgesehen, die bei ausgezogener Materialbahn im Bereich von Seitenkanten der Materialbahn angeordnet sind und die quer zur Drehachse der Welle schwenkbar sind.

Bei der bekannten Windschottanordnung übergreifen die Seitenarme im aufgerollten Zustand der Materialbahn den Bügel. Durch Ziehen am Bügel kann die Materialbahn von der Welle abgerollt werden. Gleichzeitig werden dadurch die Arme seitlich verdrängt, wobei die Bügelenden entlang der Arme abgleiten. In der ausgezogenen Endposition der Materialbahn liegen die freien Enden der Arme an den Bügelenden an. Die bekannte Windschottanordnung ist ferner in einem Behälter untergebracht, der am jeweiligen Fahrzeug montierbar ist. Bei nicht benötigtem Windschott, beispielsweise bei einer Fahrt mit geschlossenem Dach, bildet die bekannte Windschottanordnung auch bei aufgerollten Materialbahnen durch den sich quer im Fahrzeuginnenraum erstreckenden Behälter eine Störkontur.

Aus der DE 44 05 707 C2 ist eine weitere Windschottanordnung bekannt, bei der eine Materialbahn mit Hilfe wenigstens eines Luftsacks aufrichtbar ist, an dem die Materialbahn befestigt ist. Der jeweilige Luftsack bildet dabei zumindest einen Teil einer seitlichen Begrenzung der Materialbahn. Die im Fahrbetrieb auftretenden Strömungskräfte sind jedoch vergleichsweise groß, während die nur mit dem wenigstens einen Luftsack positionierte Materialbahn ein vergleichsweise instabiles Windschott bildet.

Aus der DE 197 08 156 C2 ist eine weitere Windschottanordnung bekannt, bei der eine Materialbahn fächerartig aufstellbar ist.

Eine weitere Windschottanordnung geht aus der DE 41 19 529 A1 hervor, bei welcher die Materialbahn an ausfahrbaren Überrollschutzbügeln angebracht ist, derart, dass die Materialbahn durch das Ausfahren der Überrollschutzbügel gespannt wird und dadurch automatisch das Windschott aktiviert. Aus ästhetischen Gesichtspunkten werden jedoch ausgefahrene Überrollschutzbügel während des Fahrbetriebs nicht immer erwünscht.

Aus der DE 10 2005 029 696 A1 ist eine gattungsgemäße Windschottanordnung für einen als Cabriolet ausgestalteten Personenkraftwagen bekannt, die eine Rollo-Einrichtung umfasst, die eine Welle und eine auf die Welle aufrollbaren Materialbahn aufweist. Die Windschottanordnung weist außerdem einen Bügel auf, an dem die Materialbahn befestigt ist und mit dem die Materialbahn von der Welle abwickelbar ist. Ferner sind zwei seitliche Arme vorgesehen, die bei ausgezogener Materialbahn im Bereich von Seitenkanten der Materialbahn angeordnet sind und die quer zur Drehachse der Welle schwenkbar sind. Außerdem sind die Arme mit dem Bügel antriebsgekoppelt, derart, dass ein Aufschwenken der Arme den Bügel ausziehen der Materialbahn antreibt. Ein als Spindeltrieb ausgebildeter Stellantrieb treibt über Antriebshebel die seitlichen Arme zum Ein- oder Ausschwenken der Arme an. Um ein Flattern der Materialbahn im aufgespannten Zustand zu reduzieren, ist bei der bekannten Windschottanordnung in die Materialbahn ein Querspriegel eingebunden, der an den seitlichen Armen zur Anlage kommt.

Die vorliegende Erfindung beschäftigt sich mit dem Problem, für eine Windschottanordnung der eingangs genannten Art eine verbesserte Ausführungsform anzugeben, die sich insbesondere dadurch auszeichnet, dass das Aktivieren und Deaktivieren des Windschotts vereinfacht ist und/oder dass die Integration der Windschottanordnung in das Fahrzeug erleichtert oder verbessert ist.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die seitlichen Arme mit dem Bügel antriebsmäßig zu koppeln, derart, dass durch Verschwenken der Arme der Bügel zum Ausziehen beziehungsweise zum Aufrollen der Materialbahn angetrieben wird. Diese Bauweise hat mehrere Vorzüge. Die antriebsmäßige Kopplung des Bügels mit beiden Armen führt zu einem geschlossenen, in sich abgestützten Tragrahmen für die Materialbahn, was die Stabilität dieses Rahmens und somit des aktivierten Windschotts erhöht. Gleichzeitig ermöglicht diese Bauweise ein vereinfachtes Aktivieren des Windschotts. Beispielsweise kann zumindest einer der Arme in seine Aufschwenkrichtung federbelastet oder mit Hilfe eines entsprechenden Stellantriebs angetrieben sein. Hierdurch kann zum Beispiel ein selbsttätiges Ausfahren des Windschotts realisiert werden.

Gemäß einer vorteilhaften Ausführungsform kann der jeweilige Arm über einen Kopplungshebel mit dem Bügelantrieb gekoppelt sein. Besagter Kopplungshebel ist dann einerseits am jeweiligen Arm und andererseits am Bügel jeweils quer zur Drehachse der Welle verschwenkbar gelagert. Durch diese Bauweise können die Arme beim Absenken oder Einfahren des Windschotts unter den Bügel einschwenken, der sich über die gesamte Breite der Materialbahn erstreckt. Gleichzeitig ermöglicht die Verwendung eines derartigen Kopplungshebels eine zuverlässige Zwangskopplung zwischen Arm und Bügel, die vergleichsweise preiswert realisierbar ist.

Entsprechend einer bevorzugten Ausführungsform kann die Windschottanordnung einen Stellantrieb zum Antreiben der Arme aufweisen. Das Aktivieren und Deaktivieren des Windschotts kann dadurch zusätzlich vereinfacht werden. Insbesondere kann eine Steuerung vorgesehen sein, die so ausgestaltet ist, dass sie den Stellantrieb zum Einschwenken beziehungsweise zum Ausschwenken der Arme also zum Deaktivieren beziehungsweise Aktivieren des Windschotts in Abhängigkeit einer Fahrzeuggeschwindigkeit ansteuert. Beim Überschreiten einer vorgegebenen Grenzgeschwindigkeit, zum Beispiel 30 km/h, bewirkt die Steuerung ein automatisches Aktivieren des Windschotts, während sie bei Unterschreiten der Grenzgeschwindigkeit das Windschott automatisch deaktiviert.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: eine perspektivische Ansicht eines als Cabriolet ausgestalteten Personenkraftwagens bei aktiviertem Windschott,
- Fig. 2: eine perspektivische Ansicht wie in Fig. 1, jedoch bei deaktiviertem Windschott,
- Fig. 3: eine perspektivische Ansicht auf eine Windschottanordnung,
- Fig. 4: eine Frontansicht auf die Windschottanordnung,
- Fig. 5: eine perspektivische Ansicht auf ein Detail V in Fig. IV der Windschottanordnung,
- Fig. 6: eine Ansicht wie in Fig. 4, jedoch in entgegengesetzter Blickrichtung.

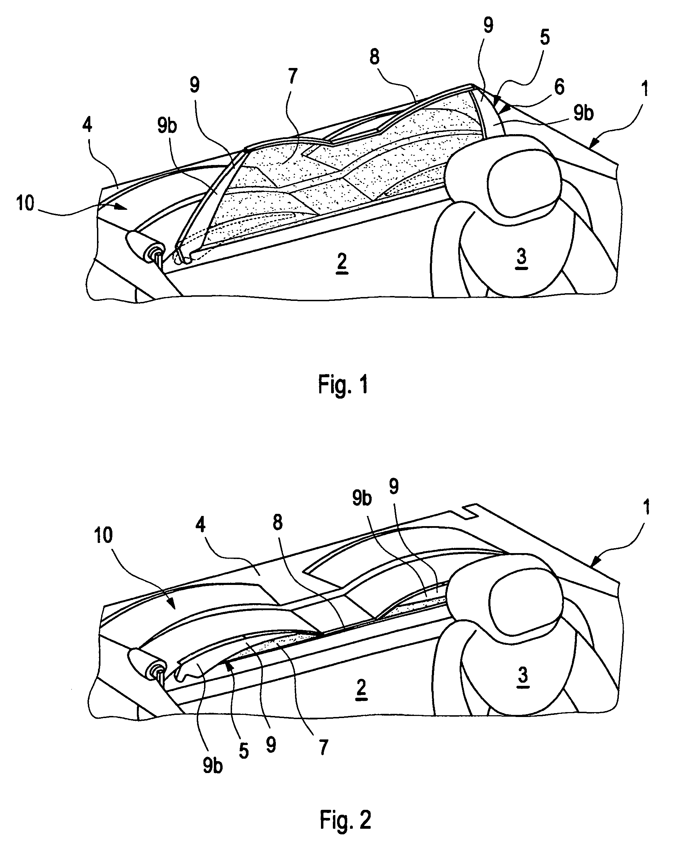

Entsprechend den Fig. 1 und 2 besitzt ein als Cabriolet ausgestalteter, nur teilweise dargestellter Personenkraftwagen 1 einen Innenraum 2 mit einem nicht näher bezeichneten Frontraum. Im Frontraum befinden sich zwei Sitze 3, nämlich ein Fahrersitz und ein Beifahrersitz, von denen hier jedoch nur einer dargestellt ist. Im Fondraum befindet sich bei einem zweisitzigen Cabriolet lediglich ein Stauraum, während ein viersitziges Cabriolet hier zwei weitere Sitze oder eine Sitzbank aufweist. Im Beispiel bildet der Fondraum lediglich eine Ablage für Gepäck und dergleichen. Die Darstellungen zeigen das Cabriolet bei geöffnetem Dach. Das Dach ist dabei in einem Heckraum untergebracht, der sich nach hinten an den Fondraum anschließt und der durch eine Heckraumabdeckung 4 verschlossen ist.

Im Bereich des Fondraums ist das Fahrzeug 1 mit einer Windschottanordnung 5 ausgestattet. Diese ist in Fig. 1 in einem aktivierten Zustand und in Fig. 2 in einem deaktivierten Zustand dargestellt. Die Windschottanordnung 5 bildet im aktivierten Zustand ein Windschott 6, das sich im Fondraum in einer sich quer zur Fahrzeuglängsrichtung erstreckenden Ebene erstreckt und dadurch eine Rückströmung von Luft von hinten in den Frontbereich behindert. Das Windschott 6 ist dabei gebildet durch eine Materialbahn 7, die durch einen oben angeordneten Bügel 8 und seitlich angeordnete Arme 9 eingerahmt ist. Im deaktivierten Zustand integriert sich das Windschott 6 beziehungsweise die Windschottanordnung 5 in die dazu benachbarte Kontur des Fahrzeugs 1.

Im gezeigten Beispiel ist das Fahrzeug 1 mit einer Fondraumabdeckung 10 ausgestattet, die den Fondraum oben abdeckt. Die Fondraumabdeckung 10 ist vorzugsweise an der Heckraumabdeckung 4 um eine Fahrzeugquerachse verschwenkbar angeordnet, um gegebenenfalls einen Zugriff zur Ablage im Fondraum zu erleichtern. Die Fondraumabdeckung 10 kann hinsichtlich ihrer Kontur an die Kontur benachbarter Bereiche des Fahrzeugs 1, wie zum Beispiel eine Heckklappe, angepasst sein. Im gezeigten Beispiel ist die Windschottanordnung 5 in die Fondraumabdeckung 10 integriert. Insbesondere ist die Windschottanordnung 5 in ihrem deaktivierten Zustand hinsichtlich ihrer Form in die Kontur der Fondraumabdeckung 10 integriert. Alternativ ist auch eine Ausführungsform denkbar, bei welcher die Windschottanordnung 5 unmittelbar in das Fahrzeug 1, insbesondere in die Heckraumabdeckung 4 baulich integriert ist. Alternativ ist ebenfalls eine Ausführungsform denkbar, bei welcher die Windschottanordnung 5 eine selbständige Einheit bildet, die nachträglich in das Fahrzeug 1 eingebaut und daraus wieder ausgebaut werden kann. Bevorzugt ist jedoch eine fest eingebaute Ausführungsform, insbesondere die feste Integration der Windschottanordnung 5 in die Fondraumabdeckung 10, welche ihrerseits leicht ein- und ausbaubar ausgestattet sein kann.

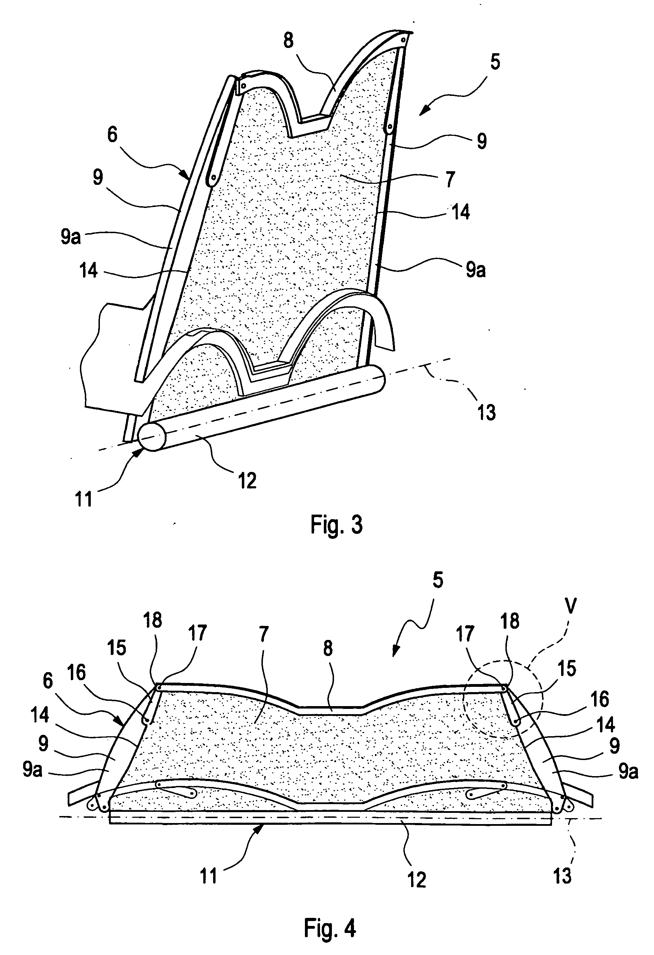

Entsprechend den Fig. 3 bis 6 umfasst die Windschottanordnung 5 eine Rolloeinrichtung 11, die eine Welle 12 sowie die auf die Welle 12 aufrollbare Materialbahn 7 aufweist. Die Welle 12 ist um eine Drehachse 13 drehbar angeordnet, die sich quer zur Fahrzeuglängsrichtung und im Wesentlichen horizontal erstreckt. Die Welle 12 kann insbesondere mit einer hier nicht gezeigten Feder gekoppelt sein, welche die Welle 12 in die Aufrollrichtung vorspannt. Bei der Materialbahn 7 handelt es sich bevorzugt um ein Netz.

Der Bügel 8 ist hinsichtlich seiner Formgebung an die Außenkontur desjenigen Fahrzeugteils angepasst, das bei deaktivierter Windschottanordnung 5 zum Bügel 8 benachbart angeordnet ist. Im Beispiel entspricht daher die Kontur des Bügels 8 der Kontur der Fondraumabdeckung 10. Der Bügel 8 bildet den oberen Abschluss der Materialbahn 7. Die Materialbahn 7 ist über die gesamte Länge des Bügels 8 am Bügel 8 befestigt. Durch Ziehen am Bügel 8 kann die Materialbahn 7 von der Welle 12 abgewickelt werden.

Ferner umfasst die Windschottanordnung 5 die beiden seitlichen Arme 9, die quer zur Drehachse 13 der Welle 12 schwenkbar gelagert sind und die bei ausgezogener Materialbahn 7 im Bereich von Seitenkanten 14 der Materialbahn 7 angeordnet sind. Die Arme 9 sind mit dem Bügel 8 antriebsgekoppelt, und zwar so, dass ein Verschwenken der Arme 9 zwangsläufig den Bügel 8 zum Ausziehen beziehungsweise zum Einrollen der Materialbahn 7 antreibt. Mit anderen Worten, durch ein aktives Verschwenken zumindest eines der Arme 9 wird der Bügel 8 zwangsläufig mitbewegt, wodurch dieser zwangsläufig die Materialbahn 7 auf der Welle 12 aufrollt beziehungsweise von dieser abrollt.

Entsprechend den Fig. 4 bis 6 weist die Windschottanordnung 5 für die antriebsmäßige Zwangskopplung zwischen den Armen 9 und dem Bügel 8 je Arm 9 einen Kopplungshebel 15 auf. Der jeweilige Kopplungshebel 15 ist an einem Ende bei 16 am jeweiligen Arm 9 und am anderen Ende bei 17 am Bügel 8 jeweils quer zur Drehachse 13 der Welle 12 verschwenkbar gelagert. Bei vollständig ausgefahrenem Windschott 6 bilden die übereinander beziehungsweise hintereinander oder nebeneinander liegenden Enden des jeweiligen Arms 9, des Bügels 8 und des zugehörigen Kopplungshebels 15 eine gemeinsame Ecke 18 des Windschotts 6. Bei eingefahrenem Windschott 6, das in den Fig. 3, 4 und 6 zusätzlich dargestellt ist, ergibt sich durch den Kopplungshebel 15 eine Kinematik zwischen den Armen 9 und dem Bügel 8. Diese Kinematik bewirkt beim Absenken des Windschotts 6, dass die beiden Arme 9 um ihre jeweilige Schwenkachse nach innen, also aufeinander zu verschwenken, während gleichzeitig die Kopplungshebel 15 um ihr armseitiges Lager 16 in gleichem Maße nach außen, also voneinander weg verschwenken. Hierdurch kann der Bügel 8 ohne Schwenkbewegung transversal, also parallel zu sich selbst nach unten bewegt werden, also Richtung Welle 12. Hierbei kann die Materialbahn 7 auf die Welle 12 aufgewickelt werden, die sich dabei um ihre Drehachse 13 bewegt. Bevorzugt erfolgt diese Aufrollbewegung der Welle 12 durch Federkraft unterstützt. Gleichzeitig bewirkt die Federbelastung der Welle 12 über die Materialbahn 7 eine Stabilisierung der durch die Arme 9, die Kopplungshebel 15 und den Bügel 8 gebildeten Rahmenkonstruktion.

Während sich das bügelseitige Lager 17 beim aktivierten Windschott 6 bezüglich einer Fahrzeugmitte weiter innen befindet als das armseitige Lager 16, befindet es sich in der deaktivierten Stellung weiter außen.

Damit die Materialbahn 7 bei aktiviertem Windschott 6 in vertikaler Richtung gespannt ist, sind die Materialbahn 7, die Welle 12 und die Arme 9 entsprechend einer vorteilhaften Ausführungsform so aufeinander abgestimmt, dass die Welle 12 beim Aktivieren des Windschotts 6, also beim Ausziehen der Materialbahn 7 stehen bleibt, noch bevor die Arme 9 ihre aufgeschwenkte Endstellung erreichen. Hierdurch kann in der vertikalen Richtung eine entsprechende Spannung in die Materialbahn 7 eingeleitet werden. Es ist klar, dass die Materialbahn 7 hierzu über eine entsprechende Länge und Elastizität verfügt.

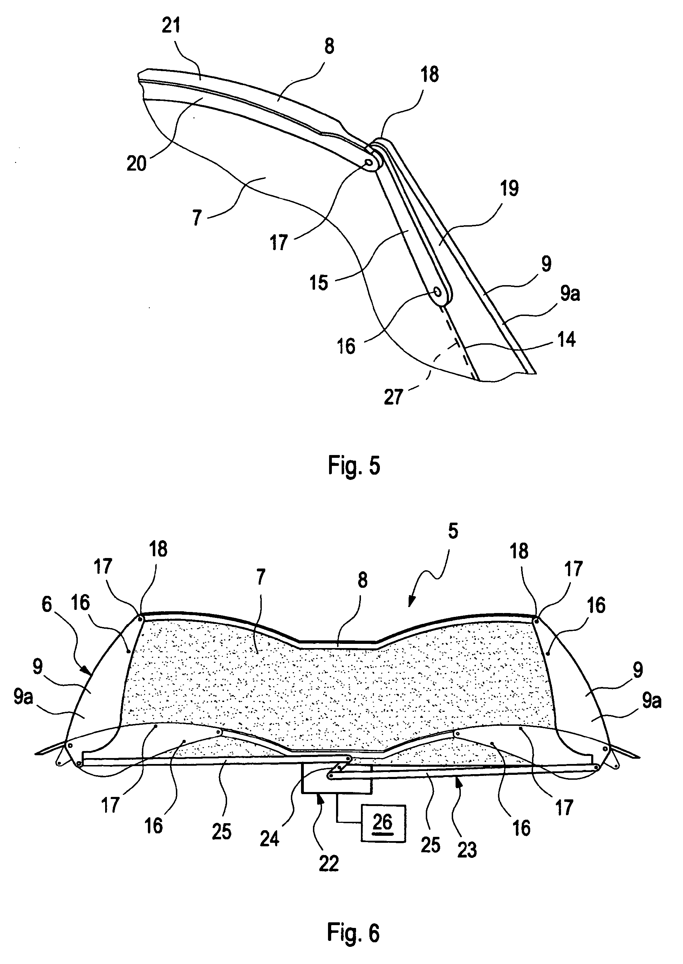

Gemäß einer vorteilhaften Ausführungsform kann die Materialbahn 7 an ihren Seitenkanten 14 so zugeschnitten sein, dass die Außenkanten 14 bei ausgefahrener Materialbahn 7 eine nach außen konkave Kontur aufweisen. Des weiteren kann die Materialbahn 7 im Bereich der jeweiligen Seitenkante 14 jeweils ein in Fig. 5 durch eine unterbrochene Linie angedeutetes Spannelement 27 aufweisen, an dem die Materialbahn 7 im Bereich ihrer Seitenkante 14 festgelegt ist. Beispielsweise kann das Spannelement 27 durch eine Schnur oder ein Band gebildet sein, das auf geeignete Weise in die Materialbahn 7 eingearbeitet ist. Beim Aufschwenken der Arme 9 wird dieses Spannelement 27 in seiner Längsrichtung gespannt, wodurch der Radius der konkaven Außenkontur vergrößert wird, was zur Einleitung einer horizontal orientierten Spannung in die Materialbahn 7 führt. Hierdurch wird erreicht, dass die Materialbahn 7 im aktivierten Zustand auch in der horizontalen Richtung gespannt ist.

Die Arme 9 können jeweils zwei zueinander parallele Abschnitte 9a und 9b aufweisen. Die Fig. 3 bis 6 zeigen jeweils nur den Abschnitt 9a. In den Fig. 3 bis 4 ist der Abschnitt 9b zum besseren Verständnis jeweils weggelassen. Im Unterschied dazu ist in den Fig. 1 und 2 nur der Abschnitt 9b erkennbar, der den dahinterliegenden Abschnitt 9a verdeckt. Die beiden Abschnitte 9a, 9b erstrecken sich zueinander parallel und bilden zwischen sich einen Zwischenraum 19 aus. In diesen Zwischenraum 19 taucht die Materialbahn 7 beim Ausziehen ein, und zwar im Bereich ihrer jeweiligen Seitenkante 14. Hierdurch entsteht bei aktiviertem Windschott 6 seitlich keine Lücke zwischen dem jeweiligen Arm 9 und der jeweiligen Seitenkante 14. Die beiden Abschnitte 9a, 9b, können beispielsweise durch zwei simultan um die Schwenkachse des Arms 9 verschwenkbare Wangen gebildet sein, die zusammen den jeweiligen Arm 9 bilden und die über einen nicht gezeigten Distanzkörper aneinander befestigt sind. Ebenso kann der Zwischenraum 19 durch eine Aussparung im Arm 9 ausgebildet sein, wodurch die beiden parallelen Abschnitte 9a und 9 b entstehen.

Zweckmäßig ist der Zwischenraum 19 so dimensioniert, dass der jeweilige Kopplungshebel 15 im Zwischenraum 19 angeordnet werden kann. Hierdurch wird einerseits die Ästhetik des Windschotts 6 verbessert. Andererseits erhöht sich die Stabilität des Windschotts 6 im aktivierten Zustand, da dann der Kopplungshebel 15 und das jeweilige Ende des Bügels 8 im Zwischenraum 19 zwischen den beiden Abschnitten 9a und 9b angeordnet und dadurch lagestabilisiert sind.

Entsprechend Fig. 5 kann der Bügel 8 beispielsweise ein T-Profil aufweisen mit einem nach unten abstehenden Längsschenkel 20 und einem den Längsschenkel 20 oben begrenzenden und beiderseits darüber vorstehenden Querschenkel 21. Bei deaktiviertem Windschott 6, also bei eingezogener Materialbahn 7, kann der Bügel 8 mit seinem Längsschenkel 20 in den Zwischenraum 19 des jeweiligen Arms 9 eintauchen. Gleichzeitig kann der Querschenkel 21 in dieser eingeschwenkten Position der Arme 9 den Zwischenraum 19 von oben abdecken beziehungsweise überdecken. Hierdurch bewirkt der Bügel 9 in der deaktivierten Stellung des Windschotts 6 eine Verblendung der Arme 9, wodurch eine ästhetische Integration der Windschottanordnung 5 für deren deaktivierten Zustand in die übrige Umgebung des Fahrzeugs, also hier insbesondere in die Fondraumabdeckung 10 realisiert wird.

Entsprechend Fig. 6 ist die Windschottanordnung 5 bei einer bevorzugten Ausführungsform mit einem Stellantrieb 22 ausgestattet, der über ein Gestänge 23 die beiden Arme 9 antreibt. Durch Verdrehen eines Wipphebels 24 lassen sich Stangen 25 antreiben, die mit den Armen 9 gekoppelt sind und ein Verschwenken der Arme 9 bewirken. Der Stellantrieb 22 ist bevorzugt ein Elektromotor und kann ein Getriebe aufweisen.

Zum Betätigen des Stellantriebs 22 kann eine Steuerung 26 vorgesehen sein, mit deren Hilfe das Windschott 6 automatisch aktiviert und deaktiviert werden kann. Dabei steuert die Steuerung 26 den Stellantrieb 22 in Abhängigkeit einer Fahrzeuggeschwindigkeit an. Bei Überschreiten einer vorbestimmten und insbesondere manuell einstellbaren Grenzgeschwindigkeit, die beispielsweise bei 30 oder 50 km/h liegen kann, bewirkt die Steuerung 26 automatisch ein Aktivieren des Windschotts 6. Beim Unterschreiten dieser Grenzgeschwindigkeit bewirkt die Steuerung 26 ein automatisches Deaktivieren des Windschotts 6. Zusätzlich oder alternativ kann auch ein willkürlich bzw. manuell betätigbarer Schalter vorgesehen sein, mit dem der Stellantrieb 22 zum Aktivieren und Deaktivieren des Windschotts 6 ansteuerbar ist.

Die Fondraumabdeckung 10 kann partiell mit kleinen Öffnungen, beispielsweise in Form eines Gitters, versehen sein, durch die eine diffuse Luftströmung in den Fondraum eintreten kann. Auch hierdurch lässt sich der Unterdruck im Innenraum 2 reduzieren, was die Windschottfunktion unterstützt.

Besonders vorteilhaft an der hier vorgeschlagenen Windschottanordnung 5 ist die Möglichkeit einer besonders komfortablen Bedienung, die insbesondere motorunterstützt und bevorzugt automatisiert erfolgen kann. Ferner ist die Unterbringung in der Fondraumabdeckung 10 besonders vorteilhaft, da die Windschottanordnung 5 dann zusammen mit der Fondraumabdeckung 10 aufschwenkbar ist, beispielsweise um den Zugang zum Fondraum zu ermöglichen. Ferner zeichnet sich die vorgeschlagene Windschottanordnung 5 durch ihre besonders kompakte Bauweise aus.

## Patentansprüche

1. Windschottanordnung für einen als Cabriolet ausgestalteten Personenkraftwagen,
- mit einer Rollo-Einrichtung (5), die eine Welle (12) und eine auf die Welle (12) aufrollbare Materialbahn (7) aufweist,
- mit einem Bügel (8), an dem die Materialbahn (7) befestigt ist und mit dem die Materialbahn (7) von der Welle (12) abwickelbar ist,
- mit zwei seitlichen Armen (9), die bei ausgezogener Materialbahn (7) im Bereich von Seitenkanten (14) der Materialbahn (7) angeordnet sind und die quer zur Drehachse (13) der Welle (12) schwenkbar sind,
- wobei die Arme (9) mit dem Bügel (8) antriebsgekoppelt sind, so dass ein Aufschwenken der Arme (9) den Bügel (8) zum Ausziehen der Materialbahn (7) antreibt,
**dadurch gekennzeichnet,**
**dass** die Materialbahn (7), die Welle (12) und die Arme (9) so aufeinander abgestimmt sind, dass die Welle (12) beim Ausziehen der Materialbahn (7) stehen bleibt, bevor die Arme (9) ihre aufgeschwenkte Endstellung erreichen.

2. Windschottanordnung nach Anspruch 1,
**dadurch gekennzeichnet,**
**dass** der jeweilige Arm (9) über einen Kopplungshebel (15) mit dem Bügel (8) antriebsgekoppelt ist, der einerseits am jeweiligen Arm (9) und andererseits am Bügel (8) jeweils quer zur Drehachse (13) der Welle (12) verschwenkbar gelagert ist.

3. Windschottanordnung nach Anspruch 1 oder 2,
**dadurch gekennzeichnet,**
- **dass** die Seitenkanten (14) der Materialbahn (7) einen nach außen konkaven Schnitt aufweisen,
- **dass** im Bereich der Seitenkanten (14) jeweils ein Spannelement (27) angeordnet ist, das bei aufgeschwenkten Armen (7) gespannt ist.

4. Windschottanordnung nach einem der Ansprüche 1 bis 3,
**dadurch gekennzeichnet,**
**dass** der jeweilige Arm (9) zwei zueinander parallele Abschnitte (9a, 9b) aufweist, zwischen denen ein Zwischenraum (19) ausgebildet ist, in den die Materialbahn (7) im Bereich ihrer jeweiligen Seitenkante (14) beim Ausziehen der Materialbahn (7) eintaucht.

5. Windschottanordnung nach den Ansprüchen 4 und 2,
**dadurch gekennzeichnet,**
**dass** der Kopplungshebel (15) im Zwischenraum (19) des jeweiligen Arms (9) angeordnet ist.

6. Windschottanordnung nach Anspruch 4 oder 5,
**dadurch gekennzeichnet,**
**dass** der Bügel (8) bei aufgerollter Materialbahn (7) beim jeweiligen, in seine eingeschwenkte Endstellung verschwenkten Arm (9) den Zwischenraum (19) ab-oder überdeckt.

7. Windschottanordnung nach einem der Ansprüche 4 bis 6,
**dadurch gekennzeichnet,**
**dass** der Bügel (8) bei aufgerollter Materialbahn (7) beim jeweiligen, in seine eingeschwenkte Endstellung verschwenkten Arm (9) zumindest teilweise in den Zwischenraum (19) eintaucht.

8. Windschottanordnung nach einem der Ansprüche 1 bis 7,
**dadurch gekennzeichnet,**
**dass** ein Stellantrieb (22) zum Antreiben der Arme (9) vorgesehen ist.

9. Windschottanordnung nach Anspruch 8,
**dadurch gekennzeichnet,**
**dass** eine Steuerung (26) zum fahrzeug-geschwindigkeitsabhängigen Ansteuem des Stellantriebs (22) zum Ein- oder Ausschwenken der Arme (9) vorgesehen ist.

10. Als Cabriolet ausgestalteter Personenkraftwagen mit einer Wndschottanordnung (5) nach einem der Ansprüche 1 bis 9.

## Claims

1. Wind blocker arrangement for a car designed as a convertible, comprising
- a blind device (5) comprising a shaft (12) and a material web (7) capable of being wound onto the shaft (12),
- a bracket (8) to which the material web (7) is secured and by means of which the material web (7) can be unwound from the shaft (12),
- two lateral arms (9) which are placed in the region of side edges (14) of the material web (7) in the pulled-out state of the material web (7) and which are pivotable at right angles to the axis of rotation (13) of the shaft (12),
- wherein the arms (9) are drive-coupled to the bracket (8), so that an upward
pivoting of the arms (9) drives the bracket (8) to pull out the material web (7),
**characterised in that**
the material web (7), the shaft (12) and the arms (9) are so matched to one another that the shaft (12) stops as the material web (7) is pulled out before the arms (9) reach their upward-pivoted end position.

2. Wind blocker arrangement according to claim 1,
**characterised in that**
the respective arm (9) is drive-coupled by way of a coupling lever (15) to the bracket (8), which is pivotably mounted on the respective arm (9) at one end and on the bracket (8) at the other end, being in each case pivotable at right angles to the axis of rotation (13) of the shaft (12).

3. Wind blocker arrangement according to claim 1 or 2,
**characterised in that**
- the side edges (14) of the material web (7) have a concave cut towards the outside, and **in that**
- a tensioning element (27) which is tensioned if the arms (9) are pivoted upwards is provided in the region of each side edge (14).

4. Wind blocker arrangement according to any of claims 1 to 3,
**characterised in that**
each arm (9) has two parallel sections (9a, 9b), between which is formed a space (19) into which the material web (7) dips in the region of its respective side edge (14) as the material web (7) is pulled out.

5. Wind blocker arrangement according to claims 4 and 2,
**characterised in that**
the coupling lever (15) is located in the space (19) of the respective arm (9).

6. Wind blocker arrangement according to claim 4 or 5
**characterised in that**
the bracket (8) covers the space (19) in the wound-up state of the material web (7) at the respective arm (9) pivoted into its inward end position.

7. Wind blocker arrangement according to any of claims 4 to 6,
**characterised in that**
the bracket (8) at least partially dips into the space (19) in the wound-up state of the material web (7) at the respective arm (9) pivoted into its inward end position.

8. Wind blocker arrangement according to any of claims 1 to 7,
**characterised in that**
an actuator (22) is provided for driving the arms (9).

9. Wind blocker arrangement according to claim 8,
**characterised in that**
a control unit (26) is provided for the selection of the actuator (22) in dependence on vehicle speed for pivoting the arms (9) inwards or outwards.

10. Car designed as a convertible, comprising a wind blocker arrangement (5) according to any of claims 1 to 9.

## Revendications

1. Système déflecteur d'air pour voiture particulière se présentant sous forme de cabriolet
- comportant un dispositif de type store (5) qui présente un arbre (12) et un matériau en bande (7) pouvant être enroulé sur l'arbre (12)
- ainsi qu'un étrier (8) auquel est fixé le matériau en bande (7) et servant à dérouler le matériau en bande (7) de l'arbre (12),
- de même que deux bras latéraux (9) qui sont disposés dans la zone d'arêtes latérales (14) du matériau en bande (7), lorsque ledit matériau en bande (7) est dévidé et peuvent pivoter transversalement à l'axe de rotation (13) de l'arbre (12)
- les bras (9) étant accouplés à l'étrier de sorte qu'un pivotement des bras (9) actionne l'étrier (8) pour dérouler le matériau en bande (7), **caractérisé en ce que** le matériau en bande (7), l'arbre (12) et les bras (9) sont définis les uns par rapport aux autres de sorte que l'arbre (12) demeure immobile lorsque le matériau en bande (7) est dévidé avant que les bras (9) n'aient atteint leur position déployée finale.

2. Système déflecteur d'air selon la revendication 1, **caractérisé en ce que** le bras (9) correspondant est accouplé à l'étrier (8) par le biais d'un levier de couplage (15) qui est logé pivotant d'une part sur le bras (9) correspondant et d'autre part sur l'étrier (8) à chaque fois transversalement à l'axe de rotation (13) de l'arbre (12).

3. Système déflecteur d'air selon la revendication 1 ou 2, **caractérisé en ce que**
- les arêtes latérales (14) du matériau en bande (7) présentent une coupe concave vers l'extérieur,
- dans la région des arêtes latérales (14) est disposé à chaque fois un élément de serrage (27) qui est serré lorsque les bras (7) sont déployés.

4. Système déflecteur d'air selon l'une quelconque des revendications 1 à 3, **caractérisé en ce que** le bras (9) correspondant présente deux sections (9a, 9b) parallèles l'une à l'autre entre lesquelles est formé un espace intermédiaire (19) dans lequel le matériau en bande (7) s'enfonce dans la région de leur arête latérale (14) respective lorsque le matériau en bande (7) est dévidé.

5. Système déflecteur d'air selon les revendications 4 et 2, **caractérisé en ce que** le levier de couplage (15) est disposé dans l'espace intermédiaire (19) du bras (9) correspondant.

6. Système déflecteur d'air selon la revendication 4 ou 5, **caractérisé en ce que** lorsque le matériau en bande (7) est dévidé, l'étirer (8) couvre ou recouvre l'espace intermédiaire (19) lorsque chaque bras (9) est pivoté dans sa position de ploiement finale.

7. Système déflecteur d'air selon l'une quelconque des revendications 4 à 6, **caractérisé en ce que** lorsque le matériau en bande (7) est dévidé, l'étrier (8) s'enfonce au moins partiellement dans l'espace intermédiaire (19) lorsque chaque bras (9) est pivoté dans sa position de ploiement finale.

8. Système déflecteur d'air selon l'une quelconque des revendications 1 à 7, **caractérisé en ce qu'**un mécanisme de commande (22) est prévu pour actionner les bras (9).

9. Système déflecteur d'air selon la revendication 8, **caractérisé en ce qu'**une commande (26) servant à commander le mécanisme de commande (22) en fonction de la vitesse du véhicule est prévue pour ployer ou déployer les bras (9).

10. Voiture particulière se présentant sous forme de cabriolet dotée d'un système déflecteur d'air selon l'une quelconque des revendications 1 à 9.
